# EUROPÄISCHE PATENTSCHRIFT

(11) **EP 2 949 096 B1**
(45) Veröffentlichungstag und Bekanntmachung des Hinweises auf die Patenterteilung: **21.12.2016**
(21) Anmeldenummer: 14701962.4
(22) Anmeldetag: 23.01.2014
(51) Int. Cl.: H04L 29/06, H04W 12/04, H04L 9/08, H04L 29/08, H04L 9/32, G06Q 20/32, H04W 4/02, H04W 64/00

(54) **BEREITSTELLUNG VON POSITIONSDATEN MITTELS EINES DISTANCE-BOUNDING PROTOKOLLS**
PRODUCTION OF POSITIONAL DATA BY MEANS OF A DISTANCE-BOUNDING PROTOCOL
PRODUCTION DE DONNÉS DE POSITION AU MOYEN D'UN PROTOCOLE DÉLIMITEUR DE DISTANCE

(30) Priorität: 25.01.2013 DE 102013201245; 04.02.2013 DE 102013201730
(43) Veröffentlichungstag der Anmeldung: 02.12.2015
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB
(86) Internationale Anmeldenummer: PCT/EP2014/051297
(87) Internationale Veröffentlichungsnummer: WO 2014/114699

(56) Entgegenhaltungen:
- EP-A1- 2 247 024
- EP-A2- 2 051 475
- HANCKE G P ET AL: "An RFID Distance Bounding Protocol", SECURECOMM2005, IEEE, 5. September 2005 (2005-09-05), Seiten 67-73, XP010902873, DOI: 10.1109/SECURECOMM.2005.56 ISBN: 978-0-7695-2369-9

## Beschreibung

Die Erfindung betrifft ein Verfahren zur sicheren Bereitstellung von Positionsdaten aus einer Lokalisierungseinheit an eine Chipkarte sowie eine entsprechende Chipkarte, eine entsprechende Lokalisierungseinheit und ein Computerprogrammprodukt.

Im Stand der Technik sind Verfahren zur zuverlässigen Bestimmung des räumlichen Abstands zweier physikalisch getrennter Einheiten oder Geräte bekannt. Insbesondere zeigt die Druckschrift US 2011/0078549 A1 ein Lesegerät für die Bestimmung der Gültigkeit einer Verbindung zu einem Transponder, das dazu ausgelegt ist, eine Antwortzeit von dem Transponder zu messen und den Transponder in zwei separaten Schritten zu authentifizieren. Ferner offenbart die Druckschrift einen Transponder zur Bestimmung der Gültigkeit einer Verbindung zu einem Lesegerät, wobei der Transponder dazu ausgelegt ist, dem Lesegerät Informationen bereitzustellen zur Antwortzeitmessung und zur Authentifizierung in zwei getrennten Schritten, wobei zumindest ein Teil der Daten für die Authentifizierung in einer Kommunikationsnachricht zwischen dem Lesegerät und dem Transponder während der Messung der Antwortzeit übertragen wird.

Im Stand der Technik sind ferner verschiedene Systeme zur Geolokalisation beweglicher Gegenstände bzw. zur Bereitstellung von Geolokalisationsdaten bekannt. Die derzeit verwendeten Systeme haben jedoch den Nachteil, dass beispielsweise GPS Informationen von Sensoren stammen, die sich nicht unter der Kontrolle der Chipkarte befinden. Die Geolokalisationsdaten sind also nicht verlässlich, denn sie könnten von einem anderen GPS, weiter entfernt gelegenen Sensor stammen oder einem Dritten gefälscht worden sein ("man in the middle attack"). Die derzeit verwendeten Geolokalisationssysteme sind also nicht vor Fälschungen der übermittelten Positionsdaten geschützt bzw. davor, dass ein Signal eines "betrügerischen" Sensors, der falsche Positionsangaben übermittelt, das Signal des eigentlich zur Verwendung vorgesehenen Sensors überlagert.

Schließlich sind aus dem Stand der Technik Anwendungen bekannt zur Nutzung von Geolokalisationsdaten für die Zwecke der Planung und Durchführung von Reisen. Insbesondere offenbart die Druckschrift US 2010/0280748 A1 ein eine Routenplanung für einen Benutzer mit Schritten zum Bestimmen eines Startpunkts und eines Zielpunkts für multimodale Reise, Anwendung von Kriterien für die Einschränkung der Anzahl von Kandidatenrouten auf der Basis des Ausgangs-und Zielpunkts, Vorschlagen einer aktualisierten Liste der Kandidatenrouten zwischen dem Ausgangspunkt und den Zielpunkt, wobei die aktualisierte Liste entweder nach einer Verzögerung automatisch und/oder auf eine Benutzerauswahl auf der Grundlage der Kriterien angezeigt wird. In einer Ausgestaltung des Verfahrens werden darin Daten zur Geolokalisation des Benutzers verarbeitet.

Weiterer Stand der Technik findet sich in EP2051475A2 und EP2247024A1.

Vor diesem Hintergrund stellt sich die Aufgabe, Positionsdaten, die eine Chipkarte aus einer externen Quelle ableitet, dieselbe Vertrauensstellung zu verschaffen, wie sie den in der Chipkarte gespeicherten Daten zukommt.

Diese Aufgabe wird jeweils mit den Merkmalen der unabhängigen Patentansprüche gelöst. Bevorzugte Ausgestaltungen und Weiterbildungen sind in den jeweils abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "Chip" oder "Microchip" wird vorliegend ein integrierter Schaltkreis verstanden, der mehrere elektronische Bauteile oder Schaltungselemente wie Transistoren, Widerstände usw. enthalten kann. Je nach Ausführungsform kann ein Chip Bestandteil von Computern, Mobilfunkgeräten, insbesondere Smartphones, Digitalkameras oder anderer, vorzugsweise portabler, Geräte sein. Nach manchen Ausführungsformen ist der Chip Bestandteil eines Dokumentes, insbesondere eines Sicherheitsdokumentes.

Als "Chipkarte" oder "Dokument" wird vorliegend jeglicher Datenträger bezeichnet, welcher einen Mikrochip und eine damit verbundene elektrisch kontaktierende oder kontaktlose Kommunikationsschnittstelle aufweist. Eine kontaktlose Schnittstelle kann insbesondere als Antenne für eine drahtlose Signalübertragung ausgebildet sein. Vorzugsweise kann die Chipkarte mit einem geeigneten Lesegerät Daten austauschen. Bei der Chipkarte kann es sich um ein Wert- oder Sicherheitsdokument, wie zum Beispiel um ein ID-Dokument, handeln. Ein ID-Dokument kann bspw. ein Ausweisdokument sein, insbesondere ein Personalausweis, ein Reisepass, ein Führerschein, ein Fahrzeugbrief, ein Fahrzeugschein oder ein Firmenausweis. Bei dem Wertdokument kann es sich um ein Zahlungsmittel handeln, insbesondere um eine Banknote oder eine Kreditkarte. Das Dokument kann auch ein sonstiger Berechtigungsausweis, zum Beispiel eine Eintrittskarte, ein Fahrschein, insbesondere ein Electronic-Ticket, ein Frachtbrief oder ein Visum sein. Der Dokumentkörper des Dokuments kann buchartig ausgebildet sein, wie dies zum Beispiel bei manchen Reisepässen der Fall ist.

Unter einer Chipkarte wird auch ein sogenanntes Funketikett verstanden, welches auch als RFID-Tag oder RFID-Label bezeichnet wird. Die Chipkarte beinhaltet vorzugsweise eine Schnittstelle zum kontaktlosen Datenaustausch mit dem Lesegerät. Je nach Ausführungsform kann die Chipkarte zum Beispiel kunststoff- und/oder papierbasiert sein.

Unter einem "Lesegerät" wird vorliegend ein Datenverarbeitungsgerät verstanden, welches mit der Chipkarte Daten austauschen kann, um die Chipkarte zu authentifizieren oder der Chipkarte zu ermöglichen, sich bei dem Lesegerät zu authentisieren. Nach Ausführungsformen kann das Lesegerät eine kryptografische Funktion zur Signierung und/oder Authentifizierung gegenüber der Chipkarte, eine Bezahlfunktion oder eine andere Funktion zur Durchführung einer Finanztransaktion, eine Ausweisfunktion, insbesondere mit Bildwiedergabe auf einer Anzeigevorrichtung, aufweisen. Insbesondere kann das Lesegerät Funktionalitäten implementieren, wie sie für Lesegeräte maschinenlesbarer Reisedokumente (MRTD) bekannt sind, insbesondere kryptografische Protokolle, wie zum Beispiel Basic Access Control (BAC) und/oder Extended Access Control (EAC). Nach manchen Ausführungsformen kann das Lesegerät dazu ausgebildet sein, Daten von dem Dokument zu lesen.

In manchen Anwendungsszenarien ist es notwendig, sicherzustellen, dass ausschließlich ein berechtigtes Lesegerät auf die in der Chipkarte gespeicherten Daten zugreifen kann, so dass sich das Lesegerät vor dem Auslesen dieser Daten gegenüber der Chipkarte authentisieren muss. Vorzugsweise beinhaltet die Authentifizierung den Nachweis, dass der Eigentümer der Chipkarte die Chipkarte dem Lesegerät willentlich zum Auslesen der Daten verfügbar gemacht hat. Dies kann zum Beispiel dadurch geschehen, dass das Lesegerät Daten, die auf der Oberfläche der Chipkarte sichtbar und vom Lesegerät optisch erfasst wurden, an die Chipkarte übermittelt werden als Nachweis, dass der Nutzer die Chipkarte (und die darauf befindlichen optisch erfassbaren Daten) dem Lesegerät willentlich gezeigt hat. Alternativ kann auch ein vom Nutzer in das Lesegerät eingegebenes Geheimnis zur Authentifizierung des Lesegerätes gegenüber der Chipkarte verwendet werden.

Unter "Positionsdaten" sind vorliegend jegliche Daten zu verstehen, welche eine Verortung, d.h. Lokalisierung, eines bestimmten Gegenstandes und insbesondere des Sensors, der die Positionsdaten ermittelt hat, in Bezug auf einen definierten Fixpunkt oder ein anderweitig definiertes Bezugssystem ermöglichen. Insbesondere kann es sich bei dem Positionsdaten um Daten handeln, welche mittels Funk-und Satellitenordnung gewonnen wurden, also insbesondere um GPS-Daten (Global Positioning System), aber auch um Daten, die mittels geodätischer Messmethoden (Lateration, Angulation, Polarmethode) oder sonstiger Verfahren (optische Geländeerkennung, Echoortung) gewonnen wurden. Die Positionsdaten können beispielsweise als planare Koordinaten, kubische Koordinaten, Polar Koordinaten oder geographische, natürliche Koordinaten oder in einem applikationsspezifischen Format, z.B. als Orts- oder Netzkennung, spezifiziert sein. Es kann sich bei den Positionsdaten also um Kennungen von Netzwerken oder sonstigen Gegenständen oder Signalsendern handeln, welche einzeln oder in Kombination eine Positionsbestimmung des Sensors ermöglichen.

Unter einer "Lokalisierungseinheit" wird im Folgenden ein Gerät oder eine Gerätekomponente verstanden, welche zur automatischen Sensierung der eigenen Position fähig ist. Die eigene Position ist in Form von Positionsdaten spezifiziert und kann von der Lokalisierungseinheit z.B. automatisch in regelmäßigen Abständen und/oder nach Erhalt einer Anfrage von einem anderen Gerät, z.B. von einer Chipkarte, ermittelt und an dieses gesendet werden.

Unter einer Chipkarte, die von einer Lokalisierungseinheit "räumlich getrennt" ist, wird vorliegend eine Chipkarte verstanden, welche die Lokalisierungseinheit nicht als eine ihrer Komponenten beinhaltet. Die räumliche Trennung kann z.B. mindestens 10 cm, nach weiteren Ausführungsformen über 100 cm betragen

Unter der Übermittlung von Daten unter Verwendung eines kryptographischen Protokolls wird im Folgenden eine Übertragung der Daten in verschlüsselter Form, z.B. mittels asymmetrischer oder symmetrischer Schlüssel, verstanden.

Der Begriff "Distance-Bounding Protokolle" bezeichnet vorliegend kryptographische Protokolle, die ein ausreichend schwierig fälschbares tatsächliches Indiz dafür liefern, dass der räumliche Abstand zweier physikalischer Einheiten einen vorgegebenen Maximalabstand nicht überschreitet. Gebräuchliche Distance-Bounding Protokolle beruhen darauf, dass eine der physikalischen Einheiten eine Challenge an die andere sendet und anhand der Zeitspanne bis zum Empfang einer Antwort errechnen kann, wie weit die antwortende physikalische Einheit maximal entlang der gewählten Übertragungsstrecke räumlich entfernt liegen kann. In diese Berechnung gehen bekannte Größen wie etwa die Geschwindigkeit der Datenübertragung bei der jeweils genutzten Datenübertragungstechnologie (Lichtgeschwindigkeit bei Funk, Schallgeschwindigkeit bei Ultraschall) und vorzugsweise auch die Prozessierungszeit für die Generierung und für den Versand der Antwort ein. Anhand der Dauer zwischen dem Absenden des Challenge bis zum Empfang der Antwort kann eine Schätzung für die räumliche Entfernung zwischen den physikalischen Einheiten bestimmt werden und damit auch, ob dieser einen vorgegebenen Maximalabstand überschreitet oder nicht. Bei einem Distance-Bounding Protokoll kann es sich zum Beispiel um ein Challenge-Response Verfahren handeln. Beispiele für Distance-Bounding Protokolle sind z.B. in Gerhard Hancke, Markus Kuhn: "An RFID distance-bounding protocol", Proceedings SecureComm 2005, und in Stefan Brands, David Chaum: "Distance-bounding protocols (extended abstract)", Proceedings Eurocrypt '93, aufgeführt.

Eine "Authentifizierung" einer Lokalisierungseinheit gegenüber einer Chipkarte besteht aus der Erbringung eines Nachweises (verifizierbaren Datums) einer behaupteten Eigenschaft der Lokalisierungseinheit gegenüber der Chipkarte ("Authentisierung") in Kombination mit der Prüfung dieses Nachweises und Akzeptanz der Echtheit der behaupteten Eigenschaft durch die Chipkarte (Authentifizierung im engeren Sinne). Während eine Authentisierung also sich auf Schritte bezieht, die von der Lokalisierungseinheit durchzuführen sind, bezieht sich der Begriff der "Authentifizierung im engeren Sinne" auf Schritte, die von der Chipkarte durchzuführen sind, "Authentifizierung" im Allgemeinen auf den gesamten Prozess.

In einem Aspekt betrifft die Erfindung ein Verfahren zur Bereitstellung von Positionsdaten an eine Chipkarte. Das Verfahren umfasst einen Abschnitt zum Empfang oder zur Ermittlung von Positionsdaten einer Lokalisierungseinheit durch die Lokalisierungseinheit, wobei die Lokalisierungseinheit von der Chipkarte räumlich getrennt ist. Bei der Lokalisierungseinheit kann es sich z.B. um einen GPS Sensor handeln oder z.B. um ein Gerät, welches in einem Fahrzeug, z.B. Bus oder Bahn, integriert ist und einen Identifikator einer aktuellen Haltestelle von z. B. einer zentralen Verkehrsplanungsstelle, dem Fahrzeugführer oder einer anderen Instanz empfängt. Weiterhin umfasst das Verfahren einen Abschnitt zur Übermittlung der Positionsdaten von der Lokalisierungseinheit an die Chipkarte über eine kontaktlose Schnittstelle unter Verwendung eines kryptographischen Protokolls. Ferner umfasst das Verfahren einen Abschnitt zur Ausführung eines Distance-Bounding Protokolls zwischen der Chipkarte und der Lokalisierungseinheit, wobei das Distance-Bounding Protokoll genau dann erfolgreich abschließt, wenn der räumliche Abstand zwischen der Chipkarte und der Lokalisierungseinheit einen vorgegebenen Maximalabstand nicht überschreitet. Schließlich sieht das Verfahren bei erfolgreichem Abschlusses des Distance-Bounding Protokolls, die Ausführung einer Chipkartenfunktion vor, wobei die Chipkartenfunktion die übermittelten Positionsdaten als Positionsdaten, die die aktuelle Position der Chipkarte angeben, verwendet.

Das Verfahren kann vorteilhaft sein, da die übertragenen Positionsdaten auf besonders sichere Art und Weise übertragen werden können. Durch die Verwendung eines kryptographischen Protokolls wird das Auslesen bzw. eine gezielte Manipulation der übertragenen Daten verhindert. Damit stellt das Distance-Bounding Protokoll sicher, dass die empfangenen Positionsdaten auch wirklich von einer Lokalisierungseinheit stammen, deren Entfernung von der Chipkarte kleiner oder gleich dem Maximalabstand ist. Es ist also nicht möglich, dass ein "Störsender", der in größerer Entfernung steht und dies z.B. mit einer höheren Signalstärke kompensiert, die Chipkarte durch Übermittlung falscher Positionsdaten in ihrer Funktion manipuliert. Die Verwendung eines Distance-Bounding Protokolls zur Sicherstellung der räumlichen Nähe und damit der Vertrauenswürdigkeit der Lokalisierungseinheit ist auch vorteilhaft, da die Lokalisierungseinheit von einer Vielzahl Chipkarten unterschiedlicher Hersteller, Funktionen und chipkartenbezogenen Dienstanbietern genutzt werden kann. Es ist nicht notwendig, dass z.B. für Bezahl-Chipkarten und Mautsystem-Chipkarten jeweils eine eigene speziell auf die jeweilige Chipkarte angepasste Lokalisierungseinheit aufgestellt wird. Voraussetzung ist lediglich, dass die Chipkarte und die Lokalisierungseinheit ein Distance-Bounding-Protokoll interaktiv durchführen und Positionsdaten austauschen können.

Nach Ausführungsformen wird der beim Distance-Bounding Protokoll geprüfte Maximalabstand bei Gelegenheit der Herstellung der Chipkarte, bei der nutzerspezifischen Initialisierung der Chipkarte oder zu einem beliebigen späteren Zeitpunkt durch einen Nutzer, einem Chipkartenprogramm oder dem Herausgeber der Chipkarte konfiguriert. Je nach Anwendungsszenario und Signalstärke der Lokalisierungseinheit kann der Maximalabstand ein oder mehrere Zentimeter, aber auch ein bis mehrere Meter betragen.

Nach Ausführungsformen ist die Chipkarte eine SIM Karte oder eine Chipkarte eines Sicherheitsdokuments. Die Lokalisierungseinheit kann die Positionsdaten beispielsweise mittels GPS, LPS, WLAN, Ultraschall, Funk- oder Bluetooth Technologie ermitteln. Das Distance-Bounding Protokoll kann z.B. auf Ultraschall oder elektromagnetischer Strahlung, insbesondere Mikrowellen, Funkwellen, sichtbarem Licht oder Infrarotlicht, beruhen.

Beispielsweise könnte eine Chipkarte, welche als Zahlungsmittel für die Nutzung öffentlicher Verkehrsmittel verwendet wird, eine Konfigurationsdatei mit einem geprüften Maximalabstand beinhalten, welcher hinreichend klein ist, um verschiedene Haltestellen auflösen zu können. Der geprüfte Maximalabstand kann also mehrere Meter, gegebenenfalls auch mehrere 100 m, betragen. Falls die Chipkarte in Kombination mit der Lokalisierungseinheit jedoch verwendet werden soll, um sich beispielsweise an einer Kasse auszuweisen und sein Konto zur Zahlung freizuschalten, ist eine höhere Auflösung erforderlich, um eine Verwechslung mit anderen Personen in der Warteschlange auszuschließen.

Nach Ausführungsformen wird der Maximalabstand durch das Distance-Bounding Protokoll vorgegeben. Nach einigen Ausführungsformen ist der Maximalabstand in der Chipkarte in einer Konfiguration gespeichert und kann vom Nutzer und/oder verschiedenen Anwendungen der Chipkarte editiert bzw. auf einen anderen Wert gesetzt werden. Dies kann vorteilhaft sein, weil die Chipkarte durch Umkonfiguration für eine Vielzahl von Anwendungsszenarien verwendet werden kann.

Nach Ausführungsformen umfasst das Verfahren ferner eine Authentifizierung der Lokalisierungseinheit gegenüber der Chipkarte. Eine erfolgreiche Authentifizierung ist dabei für die Ausführung der Chipkartenfunktion erforderlich. Die Authentifizierung kann beispielsweise mittels eines kryptographischen Protokolls wie etwa PACE erfolgen. Die Authentifizierung kann auch implizit erfolgen durch die Durchführung des Distance-Bounding Protokolls und die Feststellung, dass die Lokalisierungseinheit gleich oder weniger weit von der Chipkarte entfernt befindet als der Maximalabstand. Eine "erfolgreiche" Durchführung des Distance-Bounding Protokolls bewirkt also eine Authentifizierung der Lokalisierungseinheit gegenüber der Chipkarte. Dies kann das Verfahren beschleunigen, da bereits die erfolgreiche Durchführung des Distance-Bounding-Protokolls zur Authentifizierung dient und keine weiteren Datenaustauschschritte zwischen Chipkarte und Lokalisierungseinheit erforderlich sind.

Nach Ausführungsformen beruht das Distance-Bounding Protokoll auf einem Challenge-Response Protokoll.

Nach Ausführungsformen besitzt sowohl die Chipkarte als auch die Lokalisierungseinheit einen geschützten Speicher, in welchem ein oder mehrere kryptographische Schlüssel gespeichert sind. Der geschützte Speicher schützt die Schlüssel vor unberechtigtem Auslesen. Bei den Schlüsseln kann es sich um symmetrische oder asymmetrische Schlüssel, insbesondere um private Schlüssel eines asymmetrischen Schlüsselpaares handeln. Die besagten Schlüssel werden verwendet, um die Positionsdaten basierend auf dem kryptographischen Protokoll, also verschlüsselt, zu übertragen. Auch die für die Durchführung des Distance-Bounding Protokolls benötigten Schlüssel können in den geschützten Speichern gespeichert sein. Vorzugsweise entspricht das Sicherheitsniveau des Speichers der Chipkarte dem Sicherheitsniveau des Speichers der Lokalisierungseinheit.

Nach Ausführungsformen sieht die Ausführung des Distance-Bounding Protokolls die Verwendung zumindest eines ersten und eines zweiten kryptographischen Schlüssels vor. Der erste kryptographische Schlüssel ist in einem ersten geschützten Speichermedium der Chipkarte sicher gespeichert. Der zweite kryptographische Schlüssel ist auf einem zweiten geschützten Speichermedium der Lokalisierungseinheit gespeichert.

Nach Ausführungsformen umfassen die Positionsdaten eine Vielzahl von Ortskennungen, welche in ihrer Gesamtheit einen Ort, an dem sich die Lokalisierungseinheit befindet, identifizierten. Alternativ dazu umfassen die Positionsdaten eine Ortskennung, welche einen Ort, an dem sich die Lokalisierungseinheit befindet, identifiziert. Ein derartiger Ort kann beispielsweise ein geographisches Gebiet, z.B. eine Stadt, ein Stadtbezirk, ein Gebäude, ein Raum innerhalb eines Gebäudes oder auch ein Raumbereich sein.

Nach Ausführungsformen stellt jede Ortskennung der Vielzahl an Ortskennungen eine Netzkennung dar. Jede Netzkennung identifiziert ein Datenkommunikationsnetz, in dessen Sendebereich sich die Lokalisierungseinheit befindet, welche diese Positionsdaten ermittelt. Bei dem Datenkommunikationsnetz kann es sich beispielsweise um WLAN-Netze privater Haushalte und/oder öffentliche Institutionen handeln. Alternativ dazu kann es sich auch um die Sendebereiche verschiedener Radiosender handeln, deren Netzkennungen die Lokalisierungseinheit erfassen kann. Beispielsweise ermöglicht das Radio Data System (RDS) die Übermittlung von Zusatzinformationen über das Radionetz. Diese Zusatzinformationen können insbesondere den Programme Service Name (PS) beinhalten, der den Sendernamen in Form von bis zu 8 alphanumerischen Zeichen an gibt. Der individuell vergebene WLAN-Netz-Name bzw. der PS Sendername kann hier jeweils als Netzkennung dienen.

In Kombination mit einer geographischen Karte, in welchem die Gebiete der einzelnen Netze einschließlich deren Überlappungsbereiche enthalten sind, ist es also möglich, anhand von ein oder mehreren Netzkennungen einen bestimmten geographischen Ort bzw. ein geographisches Gebiet zu erkennen und dessen Ortskennung zu ermitteln. Die Karte kann dabei auf der Lokalisierungseinheit oder der Chipkarte gespeichert sein oder auf einem entfernten Computer, auf den die Chipkarte bzw. Lokalisierungseinheit Zugriff hat. Alternativ zur Karte kann auch eine Zuordnungstabelle verwendet werden, welcher jeder Kombination von Netzkennungen eine bestimmte Ortskennung zuweist. Eine Ortskennung ist dabei ein Identifikator eines bestimmten Ortes bzw. Gebietes.

Nach Ausführungsformen umfasst das Verfahren ferner eine Ermittlung der einen Ortskennung anhand der Vielzahl von Ortskennungen. Die Ermittlung kann auf Seiten der Chipkarte mithilfe einer Karte oder einer Zuordnungstabelle erfolgen. Alternativ dazu kann die Ermittlung auch durch die Lokalisierungseinheit erfolgen, wobei die Lokalisierungseinheit zumindest Lesezugriff die geographische Karte bzw. die Zuordnungstabelle hat, die in einem Speicher gespeichert sind, der operativ an die Lokalisierungseinheit gekoppelt ist. Der Ausdruck "operativ an eine Lokalisierungseinheit gekoppelt" bezeichnet ein Speichermedium, welches integraler Bestandteil der Lokalisierungseinheit ist oder welches über ein Netzwerk mit der Lokalisierungseinheit verbunden ist. Die Lokalisierurtgseinheit hat dabei zumindest Lesezugriff auf die Daten des Speichermediums.

Beispielsweise kann die Ermittlung der Ortskennung aus mehreren Netzkennungen folgendermaßen erfolgen: die Lokalisierungseinheit befindet sich in einem Gebiet, innerhalb welchem Radiosignale der Sender S1, S4 und S5 empfangen werden können mit einer Signalstärke, die über einem vordefinierten Schwellenwert liegt. Signale anderer Radiosender wie etwa S3 oder S455 werden in diesem Gebiet jedoch nicht bzw. nicht in hinreichender Stärke empfangen. Die Lokalisierungseinheit kann eine geographische Karte oder eine Zuordnungstabelle gespeichert haben, welche einer bestimmten Kombination an Netzkennungen {S1, S4 und S5} genau eine Ortskennung ("Gebiet Nr. 388") zuordnet. Diese Ortskennung wird mit Hilfe der Karte bzw. der Zuordnungstabelle durch die Lokalisierungseinheit ermittelt und als die Positionsdaten an die Chipkarte übermittelt. Alternativ kann die geographische Karte bzw. die Zuordnungstabelle auch auf einem Speichermedium befinden, welcher an einen entfernten Server operativ gekoppelt ist. In diesem Fall sendet die Lokalisierungseinheit eine Anfrage an den Server, die die drei Netzkennungen S1, S4 und S5 enthält. Die Anfrage kann über ein Netzwerk, z.B. das Internet gesendet werden. Der Server ermittelt daraus unter Verwendung der Karte bzw. der Zuordnungstabelle die Ortskennung und gibt diese an die Lokalisierungseinheit zurück. Die Lokalisierungseinheit übermittelt dann die Ortskennung an die Chipkarte als die Positionsdaten. Alternativ kann die Lokalisierungseinheit auch die ermittelten Netzkennungen als die Positionsdaten an die Chipkarte senden, sofern die Chipkarte dazu in der Lage ist, diese zur Bestimmung einer Ortskennung (alleine oder in Interoperation mit einem entfernten Server) zu ermitteln.

Alternativ wird die eine Ortskennung unter Anwendung eines robusten Abbildungsalgorithmus ermittelt. Ein robuster Abbildungsalgorithmus ist z.B. ein robuster Hashalgorithmus, auf "kontinuierliche/fuzzy" Ortsangaben. GPS Daten sind z.B. Positionsdaten mit einer bestimmten, begrenzten Genauigkeit. Die gleiche Lokalisierungseinheit kann bei zweimaliger Bestimmung ihrer Position daher zwei verschiedene GPS Positionsdaten liefern, welche geringfügig voneinander abweichen. Durch Verwendung eines robusten Abbildungsalgorithmus, z.B. auch in Form einer Zuweisung der Ortskennungen nicht zu einem bestimmten GPS Datenwert sondern zu einem Bereich an GPS Daten, kann eine Ableitung einer eindeutigen Ortskennung ermöglicht werden.

Nach Ausführungsformen beinhaltet die Durchführung der Chipkartenfunktion eine oder mehrere der folgenden Schritte:
- Freigabe des geschützten Speichermediums der Chipkarte zur Ermöglichung des Auslesens geschützter Daten durch die Lokalisierungseinheit oder durch ein anderes datenverarbeitendes System; hierbei kann es sich beispielsweise um personenbezogene Daten des Nutzers handeln, für welchen die Karte personalisiert wurde, also etwa Adressdaten, Altersangaben, Bankkonten oder ähnliches; und/oder
- Aufzeichnung der Positionsdaten zum Zwecke des Protokollierens einer Bewegungsspur der Chipkarte; diese Protokolle bzw. Bewegungsspuren können für verschiedene Einsatzgebiete wie etwa Mautsysteme, für die Protokollierung von Wanderstrecken oder Fahrtwegen etc. verwendet werden; und/oder
- Durchführung einer elektronischen Transaktion, insbesondere einer Banktransaktion; dies kann z.B. eine Zahlung von Waren an einer Kasse, einen Eintritt bei einer Veranstaltung etc. umfassen; und/oder
- elektronischer Fahrscheinkauf oder automatische Erhebung einer Maut basierend auf den Positionsdaten; und/oder
- Freigabe einer blockierten Funktionalität einer Hardware, welche mit der Chipkarte operational verbunden ist. Bei der Hardwarefunktionalität kann es sich insbesondere handeln um:
   - einen Entsicherungsmechanismus einer Schusswaffe; dies kann vorteilhaft sein, da eine Waffe dann z.B. nur in der unmittelbaren Nähe von ein oder mehreren Schießständen, die mit einer speziellen Lokalisierungseinheit ausgestattet sind, einsatzfähig sind; die Möglichkeiten eines Missbrauchs insb. privat genutzter Handfeuerwaffen kann so deutlich reduziert werden;
   - um den Auslösemechanismus einer Explosionsvorrichtung;
   - einen Mechanismus zum Mischen von Flüssigkeiten, und/oder Substanzen; dies kann z.B. sicherstellen, dass gefährliche, etwa zu Explosionen neigende Substanzen, nur innerhalb eines besonders gesicherten Bereiches in der Umgebung einer entsprechenden Lokalisierungseinheit verarbeitet bzw. miteinander gemischt werden können;
   - eine mechanische Bewegung der Hardware oder einer ihrer Komponenten, insbesondere das Schließen oder Öffnen eines elektronischen Schaltkreises oder das Schließen oder Öffnen einer Verschlussvorrichtung (Tür, Verschluss eines Behältnisses, Zugangsschranke zu einem geographischen Gebiet, Verschlussvorrichtung eines Bauteils oder einer Gerätekomponente etc.) oder die Ausgabe eines Warn- oder Bestätigungssignals.

Die Kombination aus einem kryptographischen Protokoll zur Übermittlung der Positionsdaten mit dem Distance-Bounding Protokoll kann besonders vorteilhaft sein, da zum einen das kryptographische Protokoll die Positionsdaten vor Manipulation schützt und durch das Distance-Bounding Protokoll implizit eine Authentifizierung der Lokalisierungseinheit gegenüber der Chipkarte bewirkt werden kann. Eine Lokalisierungseinheit kann sich damit beispielsweise als eine räumlich nahe gelegene Lokalisierungseinheit eines speziellen Typs, z.B. des speziellen Typs "SchießstandLokalisierungseinheit", ausweisen.

In einem weiteren Aspekt betrifft die Erfindung eine Chipkarte. Die Chipkarte beinhaltet:
- ein Speichermedium zur geschützten Speicherung von mindestens einem kryptographischen Schlüssel;
- eine kontaktlose Schnittstelle zum Empfang von Positionsdaten von einer Lokalisierungseinheit. Der Empfang erfolgt unter Einsatz eines kryptographischen Protokolls unter Verwendung des zumindest einen kryptographischen Schlüssels;
- ein Distance-Bounding (DB)-Modul, welches zur Ausführung eines Distance-Bounding Protokolls zwischen der Chipkarte und der Lokalisierungseinheit ausgebildet ist. Das Distance-Bounding Protokoll beinhaltet den Nachweis durch einen Geprüften, dass dieser sich innerhalb eines räumlichen Maximalabstandes von einem Prüfer befindet. Vorzugsweise agiert die Chipkarte als der Prüfer und die Lokalisierungseinheit als der Geprüfte.
- eine Chipkartenfunktion, die nur im Falle eines erfolgreichen Nachweises, dass sich die Lokalisierungseinheit innerhalb des räumlichen Maximalabstandes von der Chipkarte befindet, ausführbar ist. Die Chipkartenfunktion verwendet die übermittelten Positionsdaten als Positionsdaten, die die aktuelle Position der Chipkarte angeben.

Nach Ausführungsformen umfasst die Chipkarte ferner ein AuthentifizierungsModul, welches zur Authentifizierung der Lokalisierungseinheit ausgebildet ist. Nur im Falle einer erfolgreichen Authentifizierung der Lokalisierungseinheit werden die übermittelten Positionsdaten als Positionsdaten, die die aktuelle Position der Chipkarte anzeigen, durch die Chipkartenfunktion verwendet. In manchen Ausführungsformen fungiert das Distance-Bounding-Modul der Chipkarte gleichzeitig auch als Authentifizierungsmodul, wenn die Authentifizierung auf der erfolgreichen Durchführung des Distance-Bounding-Protokolls beruht.

In einem weiteren Aspekt betrifft die Erfindung ein System mit einer Lokalisierungseinheit. Die Lokalisierungseinheit umfasst:
- ein Lokalisierungsmodul welches zum Empfang oder Ermittlung von Positionsdaten der Lokalisierungseinheit ausgebildet ist;
- ein Speichermedium zur geschützten Speicherung von mindestens einem kryptographischen Schlüssel;
- eine Schnittstelle zur kontaktlosen Übermittlung der Positionsdaten an eine Chipkarte, wobei die Übermittlung unter Einsatz eines kryptographischen Protokolls unter Verwendung des zumindest einen kryptographischen Schlüssels erfolgt;
- ein Distance-Bounding(DB)-Modul, welches zur Ausführung eines Distance-Bounding Protokolls zwischen der Lokalisierungseinheit und der Chipkarte ausgebildet ist. Das Distance-Bounding Protokoll schließt genau dann erfolgreich ab, wenn der räumliche Abstand zwischen der Lokalisierungseinheit und der Chipkarte einen vorgegebenen Maximalabstand nicht überschreitet.

Nach Ausführungsformen umfasst die Lokalisierungseinheit ferner ein Authentifizierungs-Modul, welches zur Authentifizierung der Lokalisierungseinheit gegenüber der Chipkarte ausgebildet ist. Das Authentifizierungsmodul kann in manchen Ausführungsformen auch in dem Distance-Bounding-Modul der Lokalisierungseinheit verkörpert sein, wenn die Authentifizierung der Lokalisierungseinheit gegenüber der Chipkarte auf der erfolgreichen Durchführung des Distance-Bounding-Protokolls beruht, d.h. auf dem Nachweis, dass die Lokalisierungseinheit sich innerhalb des räumlichen Maximalabstandes zu der Chipkarte befindet.

Nach Ausführungsformen umfasst das System die Chipkarte, die nach einer der oben genannten Ausführungsformen bzw. einer Kombination der Merkmale beliebiger Ausführungsformen ausgebildet ist.

Im Weiteren werden Ausführungsformen der Erfindung mit Bezugnahme auf die Zeichnungen näher erläutert. Es zeigen:
- Figur 1: ein Blockdiagramm einer Chipkarte, einer Lokalisierungseinheit und eines Terminals,
- Figur 2: ein Flussdiagramm einer Ausführungsform eines erfindungsgemäßen Verfahrens,
- Figur 3: ein Anwendungsszenario für eine erfindungsgemäße Chipkarte und Lokalisierungseinheit in einem Fahrterfassungs-System, und
- Figur 4: ein alternatives Anwendungsszenario für eine erfindungsgemäße Chipkarte und Lokalisierungseinheit in einem Fahrterfassungs-System.

Elemente der nachfolgenden Ausführungsformen, die einander entsprechen, werden mit denselben Bezugszeichen gekennzeichnet.

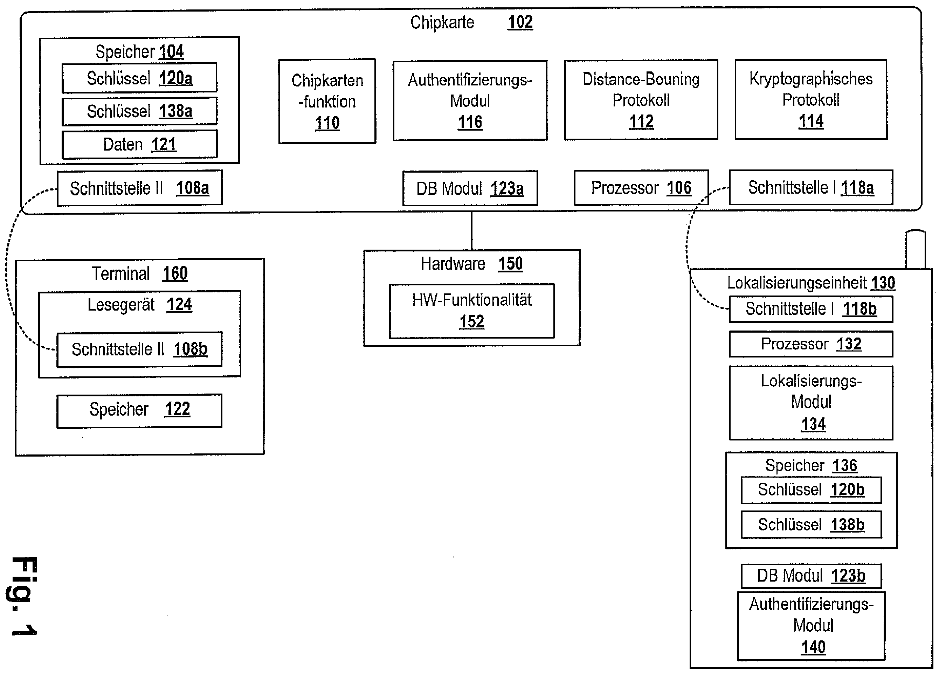

Die Figur 1 zeigt eine Chipkarte 102 mit einem geschützten Speichermedium 104. Der Speicher enthält eine oder mehrere Schlüssel 120a zur Durchführung des Distance-Bounding Protokolls. Der Speicher kann einen weiteren Schlüssel 138 a zur geschützten Übertragung der Positionsdaten von der Lokalisierungseinheit an die Chipkarte beinhalten. Außerdem kann der geschützte Speicher Daten 121 beinhalten, zum Beispiel persönliche Daten eines Nutzers, dem die Chipkarte zugeordnet ist. Die Daten können zum Beispiel aus Kontoinformationen des Nutzers, Signaturschlüsseln oder ähnlichem bestehen. Die Chipkarte ist in der Lage, ein Distance-Bounding Protokoll über ein Modul 123a in Interaktion mit einem korrespondierenden Modul 123b der Lokalisierungseinheit 130 auszuführen. Außerdem besitzt die Chipkarte einen Prozessor 106 welcher in der Lage ist, vorzugsweise nach einer Authentifizierung der Lokalisierungseinheit bei der Chipkarte eine Chipkartenfunktion 110 unter Verwendung von Positionsdaten durchzuführen. Die Positionsdaten werden von der Lokalisierungseinheit 130 mittels dessen Lokalisierungsmodul 134, zum Beispiel einem GPS Sensor, ermittelt und über eine vorzugsweise Kontaktloseschnittstelle 118 von der Lokalisierungseinheit an die Chipkarte übertragen. Die Übertragung der Positionsdaten verläuft dabei vorzugsweise basierend auf einem kryptographischen Protokoll 114 um sicherzustellen dass die übertragenen Positionsdaten weder gelesen noch manipuliert werden können. Hierzu können zum Beispiel symmetrische Schlüssel 138a, 138b verwendet werden die jeweils auf einem geschützten Speichermedium 104, 136 der Chipkarte bzw. der Lokalisierungseinheit gespeichert sind. Das zu verwendende Distance-Bounding Protokoll einschließlich eines vordefinierten Maximalabstandes ist auf der Chipkarte gespeichert. Die Chipkarte kann über entsprechende Schnittstellen verfügen die es dem Nutzer der Chipkarte oder einem Administrator erlauben, den Maximalabstand, der bei Durchführung des Distance-Bounding Protokolls geprüft wird, zu modifizieren.

Vorzugsweise verfügt die Chipkarte auch über eine Schnittstelle 108 um mit einem Lesegerät 124 eines Terminals 160 Daten auszutauschen. Bei der Schnittstelle 108 kann es sich um eine kontaktlose oder um eine kontaktbehaftete Schnittstelle handeln, die vorzugsweise geeignete Protokolle (zum Beispiel PACE bei einer kontaktlosen Schnittstelle) zur Authentifizierung des Lesegeräts und/oder zur sicheren Datenübertragung unterstützten.

Die Chipkarte kann mit einer Hardware 150, die eine bestimmte Hardwarefunktionalität 152 bereitstellt, operativ verbunden sein. Zum Beispiel kann es sich bei der Hardware 150 um eine Handfeuerwaffe handeln, die die Chipkarte beinhaltet. Bei der Hardwarefunktionalität kann es sich um die Freigabe der Schießfunktionalität der Waffe handeln. In diesem Fall kann die Chipkartenfunktion 110 darin bestehen, zu prüfen, ob sich eine Lokalisierungseinheit 130 eines Schießstandes erfolgreich bei dem Authentifizierungsmodul 116 der Chipkarte authentifiziert hat und zusätzlich von der Lokalisierungseinheit Positionsdaten empfangen wurden, die über das Distance-Bounding Protokoll verlässlich von einer nahe gelegenen Lokalisierungseinheit innerhalb des vordefinierten Maximalabstandes stammen, so dass sichergestellt ist, dass die Authentifizierung auch tatsächlich von einer Lokalisierungseinheit innerhalb des geschützten Bereiches eines Schießstands durchgeführt wurde bzw. sich damit auch die Chipkarte und die Handfeuerwaffe innerhalb dieses geschützten Bereiches befindet. In diesem Fall beinhaltet die Ausführung der Chipkartenfunktion 110 das Senden eines Signals an die Hardware 150 zur Freigabe der Schießfunktionalität. Wenn in der Chipkarte oder einem mit dieser interoperablen Dienst bzw. diesen Dienst anbietenden Server die Koordinaten mehrerer Schießstände gespeichert sind ist die Handfeuerwaffe entsprechend an mehreren Schießständen verwendbar, nicht jedoch außerhalb eines solchen geschützten Bereiches.

Bei dem Terminal 160 kann es sich um ein Datenverarbeitungssystem handeln, welches selbst oder in Verbindung mit einem entfernten Dienst bzw. Server mit der Chipkarte interoperabel ist. So kann es sich beispielsweise bei dem Terminal um ein Kassenterminal handeln, welches ein Lesegerät 124 besitzt, welches dazu ausgebildet ist, über eine optische Schnittstelle optische Daten von der Chipkarte (z.B. von der MRZ - "machine readable zone") zu lesen um sich bei der Chipkarte zu authentifizieren und Daten 121 aus der Speichermedium 104 über eine weitere Schnittstelle 108 auszulesen. Diese Daten können Kontoinformationen darstellen und von dem Terminal bzw. entfernten Dienst verwendet werden um von dem Konto des Nutzers automatisch eine Gebühr, z.B. für das Betreten des Schießstandes oder für die Benutzung der Waffe, abzubuchen.

Eine Vielzahl anderer Hardwaretypen und entsprechender Hardwarefunktionalitäten 152 werden in anderen Ausführungsformen verwendet, insbesondere solche, von welchen für den Benutzer oder Dritte eine Gefahr ausgeht und welche deshalb nur an Orten freigeschaltet werden sollen, wo sicher davon ausgegangen werden kann, dass die Hardwarefunktionalität weder dem Nutzer noch Dritten schadet.

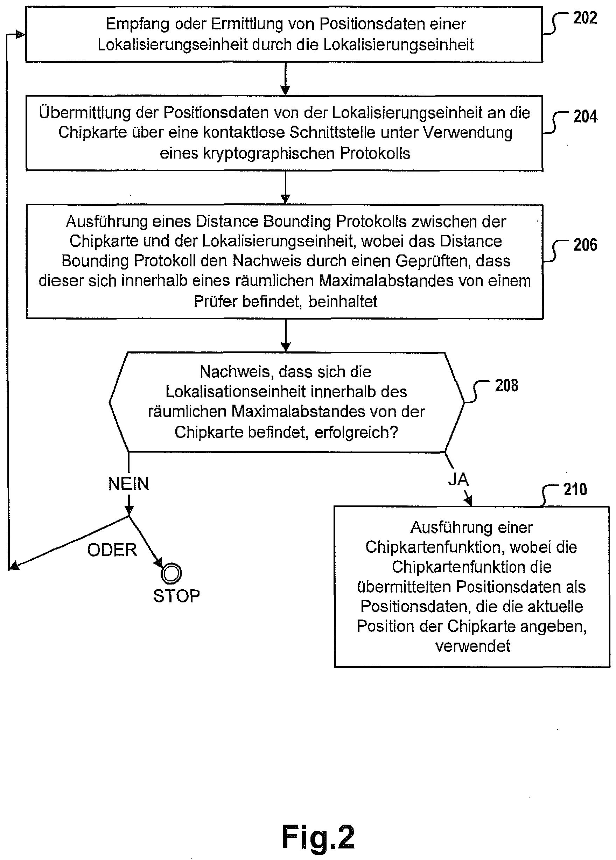

Figur 2 zeigt ein Flussdiagramm des Verfahrens nach einer Ausführungsform der Erfindung. In Schritt 202 ermittelt oder empfängt eine Lokalisierungseinheit 130 Positionsdaten die die Position der Lokalisierungseinheit angeben. Zum Beispiel kann die Lokalisierungseinheit ein Lokalisierungsmodul 134 in Form eines GPS-Sensors enthalten. Die Positionsdaten werden in Schritt 204 von der Lokalisierungseinheit an die Chipkarte über eine kontaktlose Schnittstelle in verschlüsselter Form übermittelt. Dies dient insbesondere der Vertraulichkeit der Positionsdaten und dem Schutz der Daten vor Manipulationen. In Schritt 206 wird ein Distance-Bounding Protokoll zwischen der Chipkarte und der Lokalisierungseinheit durchgeführt. In Schritt 208 prüft die Chipkarte, ob die Lokalisierungseinheit den Nachweis, dass sich die Lokalisierungseinheit innerhalb des räumlichen Maximalabstandes von der Chipkarte befindet, erfolgreich erbracht werden konnte. Falls der Nachweis gelingt, führt die Chipkarte in Schritt 210 eine Chipkartenfunktion 110 aus, wobei die Chipkartenfunktion die übermittelten Positionsdaten verwendet. Falls der Nachweis nicht möglich war, kann das Verfahren an dieser Stelle abgebrochen werden oder ein oder mehrere weitere Programmschleifen mit den Schritten 202-208 beinhalten. Die Chipkarte kann beispielsweise über einen Dienst verfügen, welcher in regelmäßigen Abständen prüft, ob Positionsdaten von einer Lokalisierungseinheit an die Chipkarte übermittelt wurden. Die Lokalisierungseinheit kann über ein Dienst verfügen, welcher in regelmäßigen Abständen die eigene Position ermittelt und/oder in regelmäßigen Abständen prüft, ob von einer Chipkarte eine Anfrage oder Challenge zur Durchführung eines Distance-Bounding Protokolls empfangen wurde. Falls das Verfahren eine Authentifizierung der Lokalisierungseinheit gegenüber der Chipkarte vorsieht, kann Schritt 206 vor oder nach der Authentifizierung erfolgen oder auch selbst in Kombination mit Schritt 208 die Authentifizierung darstellen, wobei die Authentifizierung erfolgreich ist wenn die Chipkarte feststellt, dass die Lokalisierungseinheit innerhalb des Maximalabstandes des Distance-Bounding Protokolls liegt.

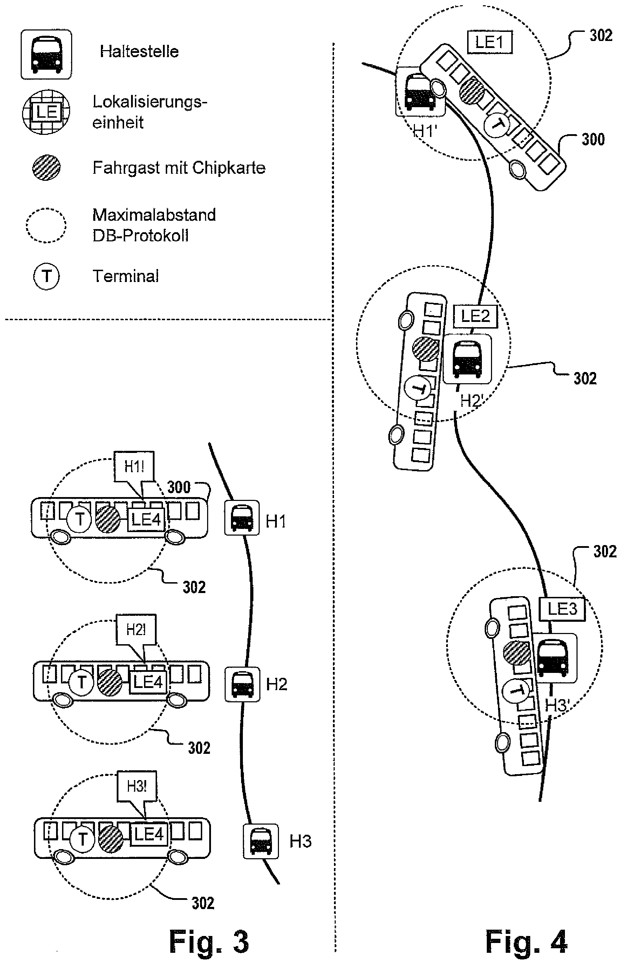

Figur 3 zeigt ein Anwendungsszenario von Ausführungsformen der Erfindung im Kontext einer automatischen Fahrtenerfassung für öffentliche Verkehrsmittel. Ein Fahrzeug 300, zum Beispiel ein Bus oder ein Zug, ist mit einer integrierten Lokalisierungseinheit LE4 und einem Terminal T ausgestattet. Bei dem Terminal T kann es sich beispielsweise um ein Terminal handeln, welches per Satellifiennetz mit einem Server eines Bankdienstleisters verbunden ist. Das Terminal verfügt über ein Lesegerät 124 und geeignete Schnittstellen 108 um Daten, die zur Durchführung des Bezahlvorgangs notwendig sind, von dem Speichermedium 104 einer Chipkarte 102 eines Fahrgastes zu lesen. Vorzugsweise befindet sich das Terminal an den Türen des Fahrzeugs bzw. es befindet sich ein Terminal an jeder Tür des Fahrzeugs. Bei jedem Zutritt eines Fahrgastes mit Chipkarte erfolgt eine automatische Authentifizierung des Terminals gegenüber der Chipkarte und umgekehrt, wobei das Terminal die Identität des Fahrgastes feststellt und auch protokolliert, bei welcher Haltestelle der Fahrgast zugestiegen ist. Wenn der Fahrgast das Fahrzeug an einer anderen Haltestelle wieder verlässt, stellt ein Terminal an der entsprechenden Fahrzeugtür ebenfalls die Identität des Fahrgastes fest und protokolliert, an welcher Haltestelle der Fahrgast das Fahrzeug verlassen hat. Diese Informationen können zur automatischen Erstellung einer Rechnung für die Nutzung des Fahrzeuges verwendet werden. Dabei stellt das Terminal die aktuellen Haltestellen beim Zusteigen bzw. Aussteigen eines Fahrgastes nicht selbst fest, sondern vielmehr werden die entsprechenden Positionsdaten bzw. Kennungen der Haltestellen von der Lokalisierungseinheit LE4 jeweils aktuell ermittelt, und an die Chipkarte wie oben beschrieben übertragen. Die Chipkarte führt eine Chipkartenfunktionalität aus welche beinhaltet, dass zumindest beim Betreten und Verlassen des Fahrzeuges (über eine Tür in dessen Nähe sich ein Terminal befindet) die aktuellen Positionsdaten (hier also Haltestellen des Zutritts bzw. Verlassens) von der Chipkarte an das Terminal übermittelt werden. Vorzugsweise geschieht diese Übermittlung kontaktlos, um das Aussteigen und Zusteigen von Passagieren so effizient wie möglich zu gestalten.

Die Chipkarte ist also einem Fahrgast, dem die Chipkarte gehört, zugeordnet. Die Lokalisierungseinheit LE4 ist integraler Bestandteil des Fahrzeugs und ist in der Lage, ihre eigene Position dynamisch während der Fahrt zu ermitteln, wobei die Genauigkeit der ermittelten Position zumindest ausreichend ist um einzelne Haltestellen, bei denen Fahrgäste zu-und aussteigen, aufzulösen. Die Lokalisierungseinheit LE 4 kann als GPS Sensor ausgestaltet sein, es kann sich aber auch um eine halbautomatische Lokalisierungseinheit handeln, bei welchem der Fahrer bei jedem Halt an einer Haltestelle die aktuell durch die LE4 ermittelte und ggf. an die Chipkarte kommunizierte Position auf die aktuelle Haltestelle H1, H2 oder H3 setzt. Alternativ kann an jeder Haltestelle ein Signalsender, z.B. ein Funksender, angebracht sein, welcher ein Signal an die fahrzeuginterne Lokalisierungseinheit LE4 sendet um dieser zu ermöglichen, ihre aktuelle Position innerhalb zum Beispiel eines Netzlinienplanes zu bestimmen und aktuell zu halten.

Der Fahrgast, dem die Chipkarte 102 zugeordnet ist, kann das Fahrzeug 300 beispielsweise bei Haltestelle H1 betreten. Während, vor oder unmittelbar nach dem Zusteigen in das Fahrzeug kann der Nutzer sich gegenüber der Chipkarte authentifizieren, zum Beispiel durch Eingabe einer PIN oder eines Passworts oder mittels biometrischer Daten. Außerdem kann der Nutzer eine entsprechende Bezahlfunktionalität seiner Chipkarte freischalten, was in manchen Fällen eine zusätzliche Authentifizierung gegenüber einer bestimmten Applikationslogik erforderlich machen kann. Beispielsweise könnte der Betreiber eines Schienennetzes oder Nahverkehrsnetzes einer Stadt eine entsprechende Applikationslogik zur automatischen Fahrterfassung und Bezahlung anbieten, die der Fahrgast auf seinem Mobilfunkgerät installieren und sich bei dieser authentifizieren muss. Der Betreiber des Schienen- bzw. Verkehrsnetzes könnte seine Kunden auch mit einer personalisierten Chipkarte ausstatten, auf welchen alle notwendigen Kontoinformationen des Kunden enthalten sind um eine automatische Rechnungsstellung und/oder Abbuchung zu ermöglichen.

Unter einem "Passwort" wird im Folgenden eine Folge aus alphanumerische Zeichen und/oder Sonderzeichen verstanden. Eine PIN besteht vorzugsweise aus wenigen (z.B. vier) Stellen und aus alphanumerischen Zeichen. Je nach Sicherheitsanforderung sind jedoch auch PINs mit weiteren Stellen und bestehend aus Ziffern oder einer Mischung von alphanumerischen- und Sonderzeichen möglich. Nach manchen Ausführungsformen der Erfindung ist das Passwort in dem Dokument gespeichert. Das Passwort zur Authentifizierung des Nutzers gegenüber der Chipkarte kann zusätzlich auch in Form einer maschinenlesbaren Zone (MRZ) auf der Chipkarte in optisch erfassbarer Weise (z.B. Aufdruck, Prägung, etc.) angebracht sein. Das Password kann zusätzlich zu der Speicherung auch in Form einer "Card Access Number" (CAN), also einer auf der Chipkarte aufgedruckten Nummer, auf der Chipkarte in optisch erfassbarer Weise aufgedruckt sein und einem Lesegerät eine Authentisierung gegenüber der Chipkarte mittels der CAN ermöglichen.

Außerdem führt die Chipkarte bei oder unmittelbar nach dem Betreten des Fahrgastes in das Fahrzeug ein Distance-Bounding Protokoll mit der Lokalisierungseinheit LE4 aus und empfängt von der Lokalisierungseinheit Positionsdaten, die zum Beispiel aus einer Kennung der aktuellen Haltestelle H1 bestehen können. Während sich das Fahrzeug 300 von Haltestelle H1 über H2 nach Haltestelle H3 bewegt übermittelt die Lokalisierungseinheit LE4 kontinuierlich in bestimmten Zeitabständen ihre aktuellen Positionsdaten und führt zusätzlich in regelmäßigen Zeitabständen das Distance-Bounding Protokoll mit der Chipkarte aus, so dass die Chipkarte "sicherstellen kann", dass die Positionsdaten von einer vertraulichen, räumlich nahe gelegenen Lokalisierungseinheit stammen. Außerdem wird die aktuelle Position der Lokalisierungseinheit bei jedem Wechsel der Haltestellen aktualisiert.

Die Kennungen der jeweils aktuellen Haltestellen werden also kontinuierlich von der Lokalisierungseinheit an die Chipkarte des Fahrgastes während der ganzen Fahrt oder zumindest beim Ein- und Aussteigen übermittelt, wobei zumindest beim Einund Aussteigen die Start-Haltestelle bzw. die Ziel-Haltestelle von der Chipkarte bei Ausführung der Chipkartenfunktionalität 110 an das Terminal übermittelt wird. Das Terminal kann die Ein- und Aussteigehaltestellen des Fahrgasts protokollieren oder in einem zentralen Server speichern. Das Terminal kann auch eine Rechnung für die tatsächlich von dem Fahrgast zurückgelegte Wegstrecke für den Einzelfall oder beispielsweise auf monatlicher oder jährlicher Basis erstellen und diese gegebenenfalls auch vollautomatisch vom Konto des Fahrgastes abbuchen. Bei der Protokollierung und/oder Rechnungserstellung bzw. Abbuchung arbeitet das Terminal vorzugsweise mit weiteren Rechnern, z.B. Datenbank- und Applikationsservern, die entsprechende Speicher bzw. Protokollierungs- bzw. Bezahldienste anbieten, zusammen, wobei die Server typischerweise in entfernten Rechenzentren lokalisiert sind.

Figur 4 zeigt eine Alternative Ausführungsform des oben beschriebenen Anwendungsszenarios. Das Anwendungsszenario von Figur 4 unterscheidet sich von dem in Figur 3 dargestellten im Wesentlichen darin, dass jeder Haltestelle eine eigene Lokalisierungseinheit LE1-LE3 fest zugeordnet ist. Anders als in Figur 3 beschrieben ist es also nicht notwendig, dass das Fahrzeug 300 selbst über eine entsprechende Lokalisierungseinheit verfügt, deren Positionsdaten kontinuierlich während der Fahrt aktualisiert werden. Vielmehr ist jeder Lokalisierungseinheit der Figur 4 ihre jeweilige Positionsinformation fest zugeordnet. So kann beispielsweise Lokalisierungseinheit LE1 immer die Ortskennung H1' als die Positionsdaten an die Chipkarte übermitteln während Lokalisierungseinheit LE2 immer die Ortskennung H2' bzw. die Lokalisierungseinheit LE3 immer die Ortskennung H3' übermittelt. Typischerweise ist der in der Chipkarte vorkonfigurierte Maximalabstand 302 für das Distance-Bounding Protokoll etwas größer für das Anwendungsszenario nach Figur 4 als nach Figur 3, da die Lokalisierungseinheit nach Fig. 4 sich außerhalb des Fahrzeuges 300 befindet.

## Patentansprüche

1. Verfahren zur Bereitstellung von Positionsdaten für eine Chipkarte (102) mit Abschnitten zum:
- Empfangen (202) oder Ermitteln von Positionsdaten einer Lokalisierungseinheit (130) durch die Lokalisierungseinheit (130), wobei die Lokalisierungseinheit (130) von der Chipkarte (102) räumlich getrennt ist;
- Übermitteln (204) der Positionsdaten von der Lokalisierungseinheit (130) an die Chipkarte (102) über eine kontaktlose Schnittstelle (118) unter Verwendung eines kryptographischen Protokolls (114);
- Ausführen (206) eines Distance-Bounding Protokolls (112) zwischen der Chipkarte (102) und der Lokalisierungseinheit (130), wobei das Distance-Bounding Protokoll (112) genau dann erfolgreich abschließt, wenn der räumliche Abstand zwischen Chipkarte (102) und Lokalisierungseinheit (130) einen vorgegebenen Maximalabstand nicht überschreitet;
- Ausführen (210) einer Chipkartenfunktion (110) bei erfolgreichem Abschluss des Distance-Bounding Protokolls (112), wobei die Chipkartenfunktion (110) die übermittelten Positionsdaten als Positionsdaten, die die aktuelle Position der Chipkarte (102) angeben, verwendet.

2. Verfahren nach Anspruch 1, ferner umfassend die Authentifizierung der Lokalisierungseinheit (130) gegenüber der Chipkarte (102) durch Nachweis im Zuge der Ausführung des Distance-Bounding-Protokolls (112), dass die Lokalisierungseinheit (130) sich innerhalb des räumlichen Maximalabstands befindet.

3. Verfahren nach einem der vorigen Ansprüche, wobei der Maximalabstand durch das Distance-Bounding Protokoll (112) vorgegeben wird.

4. Verfahren nach einem der vorigen Ansprüche, wobei das Distance-Bounding Protokoll (112) auf einem Challenge-Response Protokoll beruht.

5. Verfahren nach einem der vorigen Ansprüche, wobei die Ausführung des Distance-Bounding Protokolls die Verwendung zumindest eines ersten (120a) und eines zweiten (120b) kryptographischen Schlüssels vorsieht, wobei der zumindest erste kryptographische Schlüssel in einem ersten geschützten Speichermedium (104) der Chipkarte sicher gespeichert ist, wobei der zumindest zweite kryptographische Schlüssel auf einem zweiten geschützten Speichermedium (136) der Lokalisierungseinheit gespeichert ist.

6. Verfahren nach einem der vorigen Ansprüche, wobei die Positionsdaten umfassen:
- eine Vielzahl von Ortskennungen, welche in ihrer Gesamtheit einen Ort, an dem sich die Chipkarte (102) und/oder die Lokalisierungseinheit (130) befindet, identifizieren; oder
- eine Ortskennung, welche einen Ort, an dem sich die Chipkarte (102) und/oder die Lokalisierungseinheit (130) befindet, identifiziert.

7. Verfahren nach Anspruch 6, wobei jede Ortskennung der Vielzahl an Ortskennungen eine Netzkennung darstellt, wobei jede Netzkennung ein Datenkommunikationsnetz identifiziert, in dessen Sendebereich sich die Chipkarte (102) und/oder die Lokalisierungseinheit (130) befindet, welche diese Positionsdaten ermittelt.

8. Verfahren nach einem der vorigen Ansprüche, wobei die Durchführung der Chipkartenfunktion (110) Abschnitte umfasst zur:
- Freigabe des geschützten Speichermediums (104) der Chipkarte (102) zur Ermöglichung des Auslesens geschützter Daten (121) durch die Lokalisierungseinheit (130) oder durch ein anderes datenverarbeitendes System (160); und/oder
- Aufzeichnung der Positionsdaten zum Zwecke des Protokollierens einer Bewegungsspur der Chipkarte (102); und/oder
- Durchführung einer elektronischen Transaktion, insbesondere einer Banktransaktion; und/oder
- Durchführung eines elektronischen Fahrscheinkaufs oder einer automatischen Erhebung einer Maut basierend auf den Positionsdaten; und/oder
- Freigabe einer blockierten Hardwarefunktionalität (152) einer Hardware (150), welche mit der Chipkarte (102) operational verbunden ist.

9. Verfahren nach Anspruch 8 wobei die zur Freigabe bestimmte blockierte Hardwarefunktionalität (152) verwirklicht ist in:
- einem Entsicherungsmechanismus einer Schusswaffe;
- einem Auslösemechanismus einer Explosionsvorrichtung;
- einem Mechanismus zum Mischen von Flüssigkeiten und/oder Substanzen; oder
- einer anderweitigen Bewegung der Hardware oder einer ihrer Komponenten.

10. Chipkarte (102), aufweisend:
- ein Speichermedium (104) zur geschützten Speicherung von mindestens einem kryptographischen Schlüssel (138a);
- eine kontaktlose Schnittstelle (118) zum Empfang von Positionsdaten von einer Lokalisierungseinheit (130), wobei der Empfang unter Einsatz eines kryptographischen Protokolls (114) unter Verwendung des zumindest einen kryptographischen Schlüssels erfolgt;
- ein Distance-Bounding (DB)-Modul (123a), welches zur Ausführung eines Distance-Bounding Protokolls (112) zu einer Lokalisierungseinheit (130) ausgebildet ist, wobei das Distance-Bounding Protokoll genau dann erfolgreich abschließt, wenn der räumliche Abstand zu der Lokalisierungseinheit (130) einen vorgegebenen Maximalabstand nicht überschreitet;
- eine Chipkartenfunktion (110), die nur im Falle eines erfolgreichen Abschlusses des Distance-Bounding Protokolls ausführbar ist, wobei die Chipkartenfunktion (110) die übermittelten Positionsdaten als Positionsdaten, die die aktuelle Position der Chipkarte (102) angeben, verwendet.

11. Chipkarte (102) nach Anspruch 10, ferner umfassend ein Authentifizierungsmodul (116), welches zur Authentifizierung der Lokalisierungseinheit (130) durch die Chipkarte (102) ausgebildet ist, wobei nur im Falle einer erfolgreichen Authentifizierung der Lokalisierungseinheit (130) die übermittelten Positionsdaten als Positionsdaten, die die aktuelle Position der Chipkarte (102) anzeigen, verwendet werden.

12. System beinhaltend eine Lokalisierungseinheit (130), wobei die Lokalisierungseinheit umfasst:
- ein Lokalisierungsmodul (134) welches zum Empfang oder Ermittlung von Positionsdaten der Lokalisierungseinheit ausgebildet ist;
- ein Speichermedium (136) zur geschützten Speicherung von mindestens einem kryptographischen Schlüssel (138b);
- eine Schnittstelle (118) zur kontaktlosen Übermittlung der Positionsdaten an eine Chipkarte, wobei die Übermittlung unter Einsatz eines kryptographischen Protokolls (114) unter Verwendung des zumindest einen kryptographischen Schlüssels (138b) erfolgt;
- ein Distance-Bounding(DB)-Modul (123b), welches zur Ausführung eines Distance-Bounding Protokolls zwischen der Lokalisierungseinheit (130) und der Chipkarte (102) ausgebildet ist, wobei das Distance-Bounding Protokoll genau dann erfolgreich abschließt, wenn der räumliche Abstand zwischen der Chipkarte (102) und der Lokalisierungseinheit (130) einen vorgegebenen Maximalabstand (302) nicht überschreitet.

13. System nach Anspruch 12, wobei die Lokalisierungseinheit (130) ferner ein Authentifizierungs-Modul (140) umfasst, welches zur Authentifizierung der Lokalisierungseinheit (130) gegenüber der Chipkarte (102) ausgebildet ist.

14. System nach einem der Ansprüche 12 oder 13, ferner umfassend die Chipkarte (102), wobei die Chipkarte (102) nach einem der Ansprüche 10 oder 11 ausgebildet ist.

15. System nach einem der Ansprüche 12 bis 14,
- wobei die Chipkarte (102) eine SIM Karte oder eine Chipkarte eines Sicherheitsdokuments ist und/oder
- wobei die Lokalisierungseinheit (130) die Positionsdaten mittels GPS, LPS, WLAN, Ultraschall, Funk- oder Bluetooth Technologie ermittelt und/oder
- wobei das Distance-Bounding Protokoll auf Ultraschall oder elektromagnetischer Strahlung, insbesondere Mikrowellen, Funkwellen, sichtbarem Licht oder Infrarotlicht, beruht.

## Claims

1. A method for providing position data for a chip card (102) having portions for:
- receiving (202) or detecting position data of a localisation unit (130) by the localisation unit (130), wherein the localisation unit (130) is spatially separate from the chip card (102);
- transmitting (204) the position data from the localisation unit (130) to the chip card (102) via a contactless interface (118) with use of a cryptographic protocol (114);
- executing (206) a distance-bounding protocol (112) between the chip card (102) and the localisation unit (130), wherein the distance-bounding protocol (112) then concludes successfully precisely when the spatial distance between the chip card (102) and localisation unit (130) does not exceed a predefined maximum distance; and
- executing (210) a chip card function (110) with successful conclusion of the distance-bounding protocol (112), wherein the chip card function (110) uses the transmitted position data as position data specifying the current position of the chip card (102).

2. The method according to claim 1, further comprising the authentication of the localisation unit (130) to the chip card (102) by confirmation during the course of the execution of the distance-bounding protocol (112) that the localisation unit (130) is located within the spatial maximum distance.

3. The method according to any one of the preceding claims, wherein the maximum distance is predefined by the distance-bounding protocol (112).

4. The method according to any one of the preceding claims, wherein the distance-bounding protocol (112) is based on a challenge-response protocol.

5. The method according to any one of the preceding claims, wherein the execution of the distance-bounding protocol provides the use of at least one first (120a) and one second (120b) cryptographic key, wherein the at least first cryptographic key is securely stored in a first protected memory medium (104) of the chip card, wherein the at least second cryptographic key is stored on a second protected memory medium (136) of the localisation unit.

6. The method according to any one of the preceding claims, wherein the position data comprises:
- a plurality of location identifiers, which in their totality identify a location at which the chip card (102) and/or the localisation unit (130) is/are located; or
- a location identifier, which identifies a location at which the chip card (102) and/or the localisation unit (130) is/are located.

7. The method according to claim 6, wherein each location identifier of the plurality of location identifiers constitutes a network identifier, wherein each network identifier identifies a data communication network, in the transmission region of which the chip card (102) and/or the localisation unit (130) is/are located, which detects/detect this position data.

8. The method according to any one of the preceding claims, wherein the implementation of the chip card function (110) comprises portions for:
- releasing the protected memory medium (104) of the chip card (102) to enable the readout of protected data (121) by the localisation unit (130) or by another data-processing system (160); and/or
- recording the position data for the purpose of recording a movement path of the chip card (102); and/or
- carrying out an electronic transaction, in particular a banking transaction; and/or
- carrying out an electronic ticket purchase or an automatic levying of a toll on the basis of the position data; and/or
- releasing a blocked hardware function (152) of a hardware (150) which is operationally connected to the chip card (102).

9. The method according to claim 8, wherein the blocked hardware function (152) intended for release is implemented in:
- an unlocking mechanism of a firearm;
- a trigger mechanism of an explosion device;
- a mechanism for mixing liquids and/or substances; or
- another sort of movement of the hardware or one of its components.

10. A chip card (102), comprising:
- a memory medium (104) for the protected storage of at least one cryptographic key (138a);
- a contactless interface (118) for receiving position data from a localisation unit (130), wherein the receiving operation is performed with use of a cryptographic protocol (114) with use of the at least one cryptographic key;
- a distance-bounding (DB) module (123a), which is designed to execute a distance-bounding protocol (112) to a localisation unit (130), wherein the distance-bounding protocol is then concluded successfully precisely when the spatial distance from the localisation unit (130) does not exceed a predefined maximum distance; and
- a chip card function (110), which can be executed only in the event of a successful conclusion of the distance-bounding protocol, wherein the chip card function (110) uses the transmitted position data as position data specifying the current position of the chip card (102).

11. The chip card (102) according to claim 10, further comprising an authentication module (116), which is configured to authenticate the localisation unit (130) by the chip card (102), wherein the transmitted position data indicating the current position of the chip card (102) is used only in the event of a successful authentication of the localisation unit (130).

12. A system containing a localisation unit (130), wherein the localisation unit comprises:
- a localisation module (134), which is configured to receive or determine position data of the localisation unit;
- a storage medium (136) for the protected storage of at least one cryptographic key (138b);
- an interface (118) for the contactless transmission of the position data to a chip card, wherein the data is transmitted with use of a cryptographic protocol (114) with use of the at least one cryptographic key (138b); and
- a distance-bounding (DB) module (123b), which is configured to execute a distance-bounding protocol between the localisation unit (130) and the chip card (102), wherein the distance-bounding protocol then concludes successfully precisely when the spatial distance between the chip card (102) and the localisation unit (130) does not exceed a predefined maximum distance (302).

13. The system according to claim 12, wherein the localisation unit (130) also comprises an authentication module (140), which is configured to authenticate the localisation unit (130) to the chip card (102).

14. The system according to either one of claims 12 or 13, further comprising the chip card (102), wherein the chip card (102) is formed in accordance with any one of claims 10 or 11.

15. The system according to any one of claims 12 to 14,
- wherein the chip card (102) is a SIM card or a chip card of a security document, and/or
- wherein the localisation unit (130) identifies the position data by means of GPS, LPS, WLAN, ultrasound, or radio or Bluetooth technology, and/or
- wherein the distance-bounding protocol is based on ultrasound or electromagnetic radiation, in particular microwaves, radio waves, visible light, or infrared light.

## Revendications

1. Procédé de production de données de position pour une carte à puce (102) avec des sections pour :
- la réception (202) ou la détermination de positions de données d'une unité de localisation (130) par l'unité de localisation (130), où l'unité de localisation (130) est séparée dans l'espace de la carte à puce (102) ;
- la transmission (204) des données de position de l'unité de localisation (130) vers la carte à puces (102) par l'intermédiaire d'une interface (118) sans contact moyennant l'utilisation d'un protocole cryptographique (114) ;
- la réalisation (206) d'un protocole de délimitation de distance (112) entre la carte à puce (102) et l'unité de localisation (130), où le protocole de délimitation de distance (112) a lieu avec succès exactement lorsque la distance dans l'espace entre la carte à puce (102) et l'unité de localisation (130) ne dépasse pas une distance maximale prédéterminée ;
- l'exécution (210) d'une fonction de carte à puce (110) pour un protocole de délimitation de distance (112) couronné de succès, où la fonction de carte à puce (110) emploie les données de position transmises en tant que données de position qui indiquent la position effective de la carte à puce (102).

2. Procédé selon la revendication 1, comprenant en outre l'authentification de l'unité de localisation (130) par rapport à la carte à puce (102) par une information durant l'exécution du protocole de délimitation de distance (112) que l'unité de localisation (130) se trouve dans l'aire d'espace correspondant à la distance maximale.

3. Procédé selon l'une des revendications précédentes, où la distance maximale est indiquée par le protocole de délimitation de distance (112).

4. Procédé selon l'une des revendications précédentes, où le protocole de délimitation de distance (112) s'appuie sur un protocole de défi-réponse.

5. Procédé selon l'une des revendications précédentes, où l'exécution du protocole de délimitation de distance prévoit l'emploi d'au moins une première (120a) et d'une deuxième (120b) clé cryptographique, où l'au moins une première clé cryptographique est mémorisée de manière sécurisée dans un premier support de stockage (104) protégé de la carte à puce, où l'au moins une deuxième clé cryptographique est mémorisée sur un deuxième support de stockage (136) protégé de l'unité de localisation.

6. Procédé selon l'une des revendications précédentes, où les données de position comprennent :
- un grand nombre d'identifications de lieux, lesquelles identifient un lieu où se situe la carte à puce (102) et/ou l'unité de localisation (130) dans sa globalité ; ou
- une identification de lieu, laquelle identifie un lieu où se situe la carte à puce (102) et/ou l'unité de localisation (130).

7. Procédé selon la revendication 6, où chaque identification de lieu parmi le grand nombre des identifications de lieux représente une identification de réseau, où chaque identification de réseau identifie un réseau de communication de données, dont la région d'émission couvre le lieu de situation de la carte à puce (102) et/ou de l'unité de localisation (130), lequel détermine ces données de position.

8. Procédé selon l'une des revendications précédentes, où l'exécution de la fonction de carte à puce (110) comprend des sections pour :
- la libération du support de stockage (104) protégé de la carte à puce (102) pour rendre possible la lecture de données protégées (121) par l'unité de localisation (130) ou par un autre système de traitement de données (160) ; et/ou
- l'enregistrement des données de position à des fins de mise en protocole d'un suivi du déplacement de la carte à puce (102) ; et/ou
- la réalisation d'une transaction électronique, notamment d'une transaction bancaire ; et/ou
- la réalisation d'un achat de ticket de transport électronique ou d'un prélèvement automatique d'un péage en se basant sur les données de position ; et/ou
- la libération d'une fonctionnalité de hardware (152) bloquée d'un hardware (150), lequel est relié de manière opérationnelle avec la carte à puce (102).

9. Procédé selon la revendication 8, où la fonctionnalité de hardware (152) bloquée prévue pour la libération est concrétisée dans :
- un mécanisme de désarmement d'une arme à feu ;
- un mécanisme de libération d'un dispositif d'explosion ;
- un mécanisme pour le mélange de liquides et/ou de substances ; ou
- un autre mouvement du hardware ou de l'un de ses composants.

10. Carte à puce (102) présentant :
- un support de stockage (104) pour le stockage protégé d'au moins une clé cryptographique (138a) ;
- une interface (118) sans contact pour la réception de données de position à partir d'une unité de localisation (130), où la réception a lieu moyennant l'emploi d'un protocole cryptographique (114) en employant l'au moins une clé cryptographique ;
- un module de délimitation de distance (module DB) (123a), lequel est conçu pour l'exécution d'un protocole de délimitation de distance (112) par rapport à une unité de localisation (130), où le protocole de délimitation de distance est couronné de succès exactement lorsque la distance dans l'espace par rapport à l'unité de localisation (130) ne dépasse pas une distance maximale prédéterminée ;
- une fonction de carte à puce (110) qui ne peut s'exécuter que dans le cas d'un résultat couronné de succès du protocole de délimitation de distance, où la fonction de carte à puce (110) emploie les données de position transmises en tant que positions de données qui indiquent la position effective de la carte à puce (102).

11. Carte à puce '**.** (102) selon la revendication 10, comprenant en outre un module d'authentification (116), lequel est conçu pour l'authentification de l'unité de localisation (130) par la carte à puce (102), où uniquement dans le cas d'une authentification de l'unité de localisation (130) couronnée de succès, les données de position transmises sont employées en tant que positions de données qui indiquent la position effective de la carte à puce (102).

12. Système contenant une unité de localisation (130), où l'unité de localisation comprend :
- un module de localisation (134) lequel est conçu pour la réception ou la transmission de données de position de l'unité de localisation ;
- un support de stockage (136) pour le stockage protégé d'au moins une clé cryptographique (138b) ;
- une interface (118) pour la transmission sans contact des données de position vers une carte à puce, où la transmission s'effectue moyennant l'emploi d'un protocole cryptographique (114) en utilisant l'au moins une clé cryptographique (138b) ;
- un module de délimitation de distance (module DB) (123b), lequel est conçu pour l'exécution d'un protocole de délimitation de distance entre l'unité de localisation (130) et la carte à puce (102), où le protocole de délimitation de distance est couronné de succès exactement lorsque la distance spatiale entre la carte à puce (12) et l'unité de localisation (130) ne dépasse pas une distance maximale (302) prédéterminée.

13. Système selon la revendication 12, où l'unité de localisation (130) comprend en outre un module d'authentification (140), lequel est conçu pour l'authentification de l'unité de localisation (130) par rapport à la carte à puce (102).

14. Système selon l'une des revendications 10 ou 13, comprenant en outre la carte à puce (102), où la carte à puce (102) est conçue selon l'une des revendications 10 ou 11.

15. Système selon l'une des revendications 12 à 14,
- où la carte à puce (102) est une carte SIM ou une carte à puce d'un document de sécurité et/ou
- où l'unité de localisation (130) détermine les données de position au moyen de GPS, de LPS, de WLAN, d'ultrasons, de la technologie radio ou Bluetooth, et/ou
- où le protocole de délimitation de distance repose sur des ultrasons ou un rayonnement électromagnétique, notamment des micro ondes, des ondes radio, la lumière visible ou la lumière infrarouge.
